**Europäisches Patentamt**

**European Patent Office**

**Office européen des brevets**

(19)

(11) Veröffentlichungsnummer: **0 196 550**

**B1**

(12) **EUROPÄISCHE PATENTSCHRIFT**

(45) Veröffentlichungstag der Patentschrift:
10.08.88

(21) Anmeldenummer: **86103710.9**

(22) Anmeldetag: **19.03.86**

(51) Int. Cl.⁴: **A 47 J 43/25**, B 26 D 3/18

(54) Halter zum Handhaben von auf Küchengeräten zu zerkleinernden Früchten.

(30) Priorität: **26.03.85 DE 8509037 U**

(43) Veröffentlichungstag der Anmeldung:
**08.10.86 Patentblatt 86/41**

(45) Bekanntmachung des Hinweises auf die Patenterteilung:
**10.08.88 Patentblatt 88/32**

(84) Benannte Vertragsstaaten:
**AT BE CH DE FR IT LI NL**

(56) Entgegenhaltungen:
**CH-A-463 719**
**DE-A-1 629 975**
**DE-C-2 857 743**

(73) Patentinhaber: **A. Börner GmbH, Industriegebiet, D-5561 Niederkail (DE)**

(72) Erfinder: **Börner, Alfred, Schulstrasse 5, D-5514 Orsfeld (DE)**
Erfinder: **Börner, Jürgen, Industriegebiet, D-5561 Niederkail (DE)**

(74) Vertreter: **Goddar, Heinz J., Dr., FORRESTER & BOEHMERT Widenmayerstrasse 4/I, D-8000 München 22 (DE)**

## Beschreibung

Die Erfindung betrifft einen Halter zum Handhaben von auf Küchengeräten zu zerkleinernden Früchten, Gemüsen oder dergleichen, mit einem zur Unterseite hin offenen, die zu zerkleinernde Frucht zumindest teilweise in seinem Innenraum aufnehmenden, etwa zylinderförmigen Gehäuse, um welches herum ein die Unterseite des Halters bildender Randflansch angeordnet ist, wobei der Boden des Gehäuses mit einem Durchbruch versehen ist, in welchem ein Ausschiebestempel koaxial zur Gehäuseachse verschiebbar geführt ist.

Derartige Halter verwendet man für Früchte oder dergleichen, die auf einem Haushaltsgerät zerkleinert werden sollen, das eine Arbeitsplatte mit Schneidwerkzeugen und seitlichen, die Oberfläche der Arbeitsplatte überragenden Führungsleisten aufweist. Der aus einem konkav ausgehöhlten, einseitig offenen, die zu zerkleinernde Frucht aufnehmenden Gehäuse bestehende Halter, der einen die Gehäuseöffnung nach außen überragenden Auflageflansch aufweist, kann an der Außenseite des Gehäuses, welches insofern als Handhabe dient, von einer Hand ergriffen an jeder Stelle des Küchengerätes auf die Führungsleisten aufgesetzt werden und in Längsrichtung der Arbeitsplatte auf den Führungsleisten hin- und herbewegt werden. Dabei ist der Halter in der Ebene der Hin- und Herbewegung auf den Führungsleisten verschwenkbar. Der Halter muß nicht sofort auf den Führungsleisten aufgesetzt werden, dies geschieht bei großen Früchten vielmehr erst dann, wenn die Frucht bereits soweit aufgeschnitten ist, daß der verbleibende Teil vollständig von dem Innenraum des Gehäuses aufgenommen wird.

Ein bekannter Halter dieser Art ist in den DE-U-78 16 028 beschrieben. Dieser Halter besitzt auf der in den Innenraum des Gehäuses ragenden Unterseite seines Ausschiebestempels eine kreisförmige Andruckplatte, welche mit kurzen Haltespitzen versehen ist. Die Andruckplatte weist kleinere Durchtrittsöffnungen auf, durch welche im Boden des Gehäuses befestigte und bis zur Unterseite des Halters reichende Haltestifte hindurchgreifen. Darüber hinaus weist der bekannte Halter schräg nach oben und außen gerichtete, im stumpfen Winkel zum Randflansch stehende Fingerschutzflansche auf, welche sich diametral gegenüberliegen, wobei die dadurch entstandenen Ränder des Randflansches geradlinig und parallel zueinander verlaufend ausgebildet sind.

Obwohl sich dieser Halter sehr gut für alle möglichen Arten von Früchten und Gemüsen bewährt hat, sind ihm bisher gewisse Einsatzbereiche verschlossen geblieben. Insbesondere das Längsaufschneiden von Früchten ist mit diesem Halter nicht oder nur unvollkommen möglich. Bei einigen Nahrungsmitteln ist es jedoch gerade wünschenswert, Früchte längs aufzuschneiden.

Man denke nur an die begehrten langen Pommes frites, die man nur dadurch erreichen kann, daß man eine Kartoffel in ihrer Längsrichtung in Streifen schneidet.

Es ist daher Aufgabe der Erfindung, einen Halter der eingangs genannten Art derart zu verbessern, daß er in weiteren Einsatzbereichen, insbesondere zum Längsaufschneiden von Früchten verwendet werden kann.

Diese Aufgabe wird dadurch gelöst, daß der Randflansch auf der Unterseite des Halters an mindestens einer Stelle seines Umfanges eine muldenförmige Haltevertiefung aufweist, durch die der Innenraum des Gehäuses radial nach außen mit der Umgebung verbunden ist, wobei die muldenförmige Haltevertiefung sowie der Innenraum des Gehäuses zum Halterung länglicher Früchte zu ihrer Zerkleinerung in Längsrichtung gestaltet sind.

Diese Lösung hat den Vorteil, daß nunmehr auch Früchte längs aufgeschnitten werden können. Die aufzuschneidende Frucht liegt nun sicher in der muldenförmigen Haltevertiefung des Randflansches sowie im Innenraum des Gehäuses. Damit die Frucht auch parallel zur Schneidebene des Küchengerätes liegt, kann der Aufschiebestempel bis auf Höhe der Haltevertiefung abgesenkt werden. Die so gehaltene Frucht kann sich dann an dem der Haltevertiefung gegenüberliegenden Innenrand des Gehäuses während der Schneidbewegung abstützen. Nebenbei bewirkt die Ausbildung der muldenförmigen Haltevertiefungen, daß der Halter beim Verkippen um eine Achse quer zur Schneidrichtung erst bei sehr viel größeren Kippausschlägen mit seinem Randflansch in die Schneidmesser geraten würde, als dies bei Haltern der Fall wäre, die die muldenförmigen Haltevertiefungen nicht aufweisen. Vorteilhaft ist auch, daß die Möglichkeit Früchte nunmehr längs aufschneiden zu können nicht auf Kosten der bereits vorhandenen universellen Einsatzbarkeit des Halters geht. Es ist vielmehr möglich, den Halter wie bisher zu benutzen.

Insbesondere bei der Verwendung des Halters zum Längsaufschneiden von noch längeren Früchten ist es vorteilhaft, wenn zwei Haltevertiefungen an sich diametral gegenüberliegenden Stellen des Umfanges ausgebildet sind. Nun liegt die aufzuschneidende Frucht mittig in dem Halter und wird sowohl durch zwei Haltevertiefungen wie auch durch den Aufschiebestempel und ggf. die Haltestifte sicher gehalten. Wenn gegen Ende des Aufschneidens der Halter mit seinem Randflansch auf den Führungsleisten des Küchengerätes aufliegt, wird der Rest der Frucht mittels des Aufschiebestempels weiter aufgeschnitten.

Die Haltevertiefungen können im wesentlichen eine zur Unterseite des Halters hin offene Wannenform aufweisen. Diese Form ist derart, daß die meisten Früchte sich großflächig an die Haltevertiefungen schmiegen, wenn die Früchte längs aufgeschnitten werden.

Besonders vorteilhaft ist, wenn der Grund der Haltevertiefungen in flachen Winkel bezüglich der Unterseite des Halters zum Innenraum des Gehäuses hin abfällt. Dieser Vorteil kommt insbesondere dann zur Geltung, wenn man grössere Kartoffeln längs aufschneiden will. Die Kartoffel kann nun mittig in den Halter eingelegt werden, wobei die nunmehr zum Innenraum des Gehäuses hin abfallenden Haltevertiefungen den Krümmungsflächen einer Kartoffel weitgehend entsprechen. Dies bewirkt, daß die Kartoffel sowohl bei der Hin- als auch bei der Herbewegung auf dem Küchengerät bereits in starkem Maße von den Haltevertiefungen gehalten ist. Nicht unerheblich ist dabei, daß trotz der Verbesserung des Haltens von kürzeren, längs aufzuschneidenden Früchten, die Handhabung des Halters beim Längsaufschneiden von längeren Früchten, die weit über die Haltevertiefungen hinausragen, nicht verschlechtert wird.

Die Form der Haltevertiefungen kann jeweils etwa einen Teil der Mantelfläche eines gedachten Paraboloids entsprechen, dessen Symmetrieachse quer zur Achse des Gehäuses liegt und dessen Achse schneidet. Diese Formgebung der Haltevertiefungen ist in besonders gutem Maße den Oberflächen der meisten Früchte angepaßt. Das einfache Halten der längs aufzuschneidenden Früchte wird noch weiter dadurch erleichtert, daß auf dem Grund der Haltevertiefungen verteilte Haltespitzen für die zu zerkleinernde Frucht angebracht sind.

Insbesondere für den Teil des Aufschneidevorganges, bei dem der Halter mit seinem Randflansch auf den Führungsleisten des Küchengerätes aufliegt und die längs in den Halter eingelegte Frucht mittels des Ausschiebestempels aus den Haltevertiefungen herausgedrückt wird, ist es günstig, daß der Ausschiebestempel eine an sich bekannte Fruchtandruckplatte aufweist, deren Durchmesser der Durchmesser des Gehäuses angepaßt ist. Somit erstreckt sich die Fruchtandruckplatte von einer Haltevertiefung zur anderen und kann damit auch zum Schluß des Aufschneidens der längs aufzuschneidenden Frucht diese großflächig halten, ohne daß befürchtet werden muß, daß sich die Frucht an ihren Enden wegbiegt und das nur der mittlere Teil der Frucht zu Ende geschnitten wird. Wie beim Stand der Technik ist es auch hier günstig, wenn die Fruchtandruckplatte zum Aufnehmen der Schnittkräfte mit Haltespitzen versehen ist.

Vorteilhaft ist auch, daß der Rand des Halters im Bereich der Haltevertiefungen im Abstand zum Gehäuse an sich bekannte schräg angestellte Fingerschutzflansche aufweist, welche auf der der Unterseite abgewandten Seite des Randflansches die Haltevertiefungen übergreifen. Somit ist auch bei dem neuerungsgemäßen Halter gewährleistet, daß der Benutzer mit seiner Hand nicht von dem Randflansch abrutschen kann, selbst wenn seine Finger über den Haltevertiefungen liegen.

Vorzugsweise beträgt die mittlere lichte Weite eine Haltevertiefung etwa 2/3 des Durchmessers des Gehäuses. Die mittlere Tiefe einer Haltevertiefung kann vorzugsweise 1/5 der Höhe des Gehäuses betragen. Die mittlere Neigung der Haltevertiefung zum Innenraum des Gehäuses beträgt vorzugsweise bezüglich der Unterseite etwa 15°.

Im folgenden werden zwei Ausführungsbeispiele der Erfindung anhand von Zeichnungen näher erläutert. Es zeigen:

Figur 1    eine Draufsicht auf die Unterseite einer ersten Ausführungsform des erfindungsgemäßen Halters,

Figur 2    eine Schnittansicht des Halters aus Fig. 1 entlang der Linie II-II,

Figur 3    eine Schnittansicht des Halters aus Fig. 1 entlang der Linie III-III

Figur 4    eine Draufsicht auf die Unterseite einer zweiten Ausführungsform des erfindungsgemäßen Halters,

Figur 5    eine Schnittansicht des Halters aus Fig. 1 entlang der Linie V-V und

Figur 6    eine Schnittansicht des Halters auf Fig. 4 entlang der Linie VI-VI.

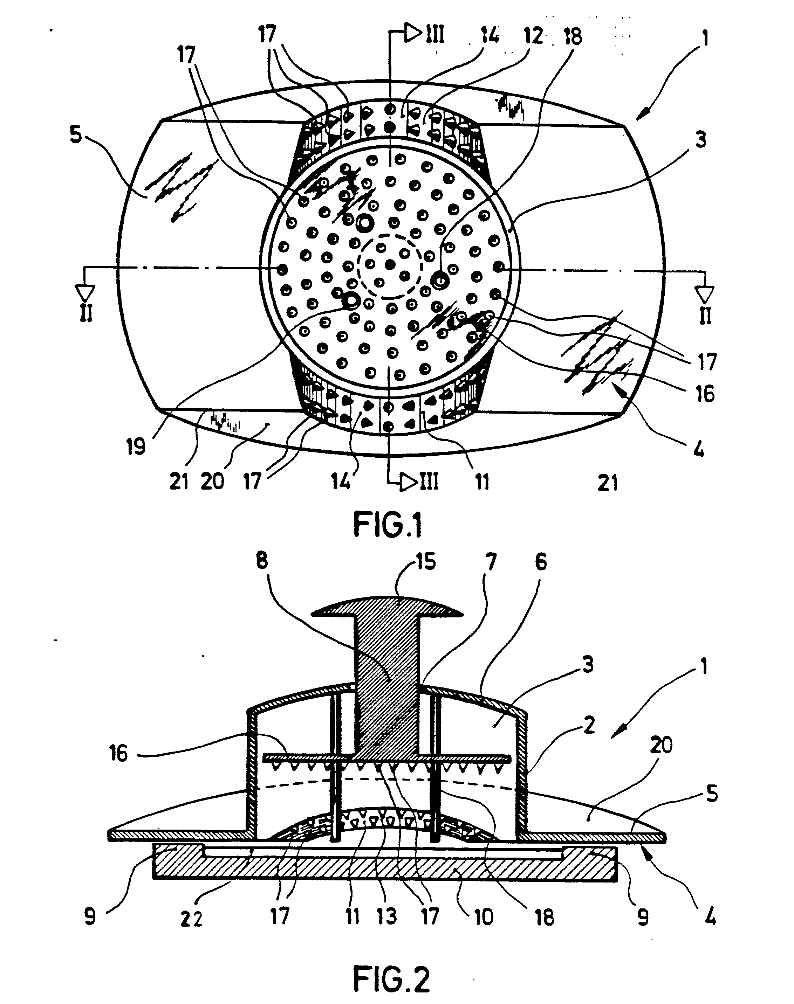

Zunächst werden die Gemeinsamkeiten der beiden Ausführungsformen des erfindungsgemäßen Halters 1 beschrieben. Wie die Zeichnungen zeigen, umfaßt der Halter 1 ein zu seiner Unterseite hin offenes etwa zylindrisches Gehäuse 2, welches dazu dient, in seinem Innenraum 3 die zu zerkleinernde Frucht zumindest teilweise aufzunehmen. Um das Gehäuse 2 herum ist ein die Unterseite 4 des Halters bildender Randflansch 5 angeordnet. Aus den Schnittdarstellungen in den Fig. 2, 3 und 5, 6 ist zu ersehen, daß in dem Boden 6 des Gehäuses 2 ein Durchbruch 7 vorgesehen ist, in welchem ein Ausschiebestempel 8 koaxial zur Gehäuseachse verschiebbar geführt ist.

Der Randflansch 5, welcher, wie in der Fig. 2 dargestellt ist, zum Aufsetzen des Halters 1 auf Führungsleisten 9 eines Küchenhobels 10 dient, weist auf der Unterseite 4 des Halters 1 muldenförmige Haltevertiefungen 11 und 12 auf. Durch die Haltevertiefungen 11 und 12 ist der Innenraum 3 des Gehäuses 2 radial nach außen mit der Umgebung verbunden.

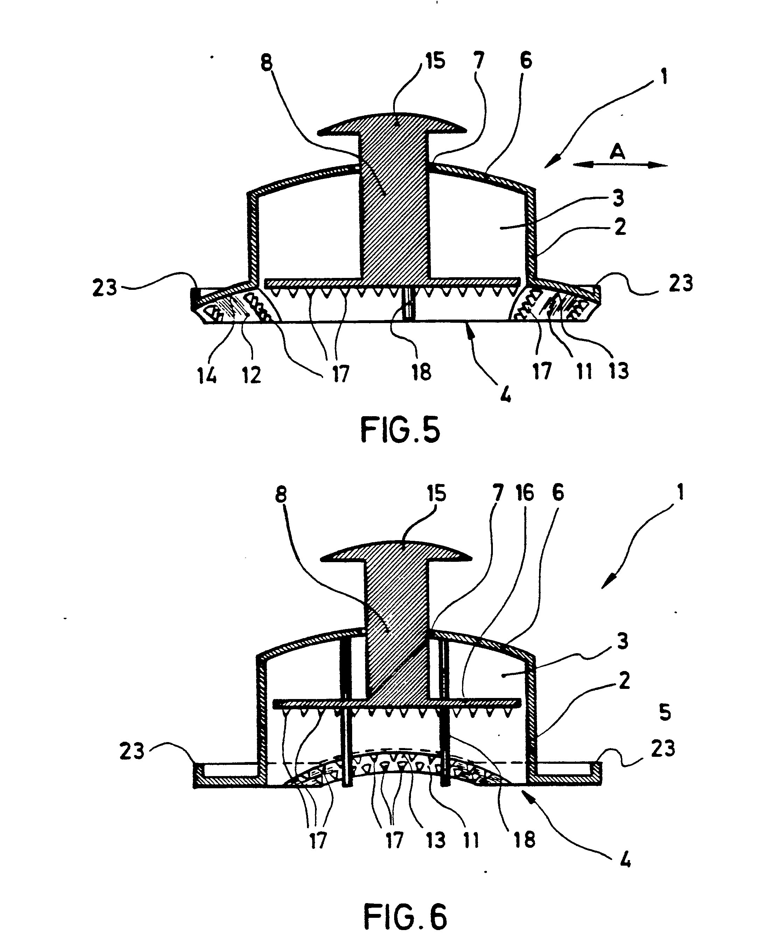

Die beiden Haltevertiefungen 11 und 12 liegen sich diametral gegenüber. Wie aus den Fig. 2 und 6 ersichtlich ist, weisen die Haltevertiefungen 11 und 12 im wesentlichen eine zur Unterseite 4 des Halters 1 hin offenen Wannenform auf. Dabei fällt der Grund 13 bzw. 14 der Haltevertiefungen 11 bzw. 12 im flachen Winkel von hier etwa 15° bezogen auf die Unterseite 4 des Halters 1 zum Innenraum 3 des Gehäuses 2 hin ab.

Die Form der Haltevertiefungen 11 und 12 läßt sich am ehesten mit einem Teil der Mantelfläche eines gedachten Paraboloides vergleichen, dessen Symmetrieachse quer zur Achse des Gehäuses 2 liegen würde und deren Achse schneiden würde. Wichtig ist jedoch allein, daß die Haltevertiefungen 11 und 12 so ausgebildet sind, daß einerseits Früchte, die längs aufgeschnitten werden sollen und den Randflansch nur geringfügig überragen, ebensogut aufgeschnitten werden können, wie Früchte, die den Randflansch um einiges mehr überragen.

Der Grund 13 bzw. 14 der Haltevertiefungen 11 bzw. 12 weist Haltespitzen für die zu zerkleinernde Frucht auf. Der Ausschiebestempel 8 ist außerhalb des Gehäuses mit einem Knauf 15 versehen, welcher als Handhabe dient. Im Inneren weist er eine Druckplatte 16 auf, welche parallel zur Unterseite 4 des Halters 1 ausgerichtet ist und deren Durchmesser etwa dem Innendurchmesser des Gehäuses 2 entspricht.

Gemäß einer nicht dargestellten Ausführungsform weist die Druckplatte 16 keine Kreisform auf, sondern erstreckt sich in Form eines Ovals von der einen Haltevertiefung 11 zu der anderen Haltevertiefung 12.

Die Druckplatte 16 ist ebenso wie der Grund der Haltevertiefungen 11 und 12 mit Haltespitzen 17 versehen. Parallel zu dem Ausschiebestempel verlaufen drei, im Boden 6 des Gehäuses 2 befestigte Haltestifte 18, welche bis zur Unterseite 4 des Halters 1 reichen und durch Durchtrittsöffnungen 19 der Druckplatte 16 geführt sind.

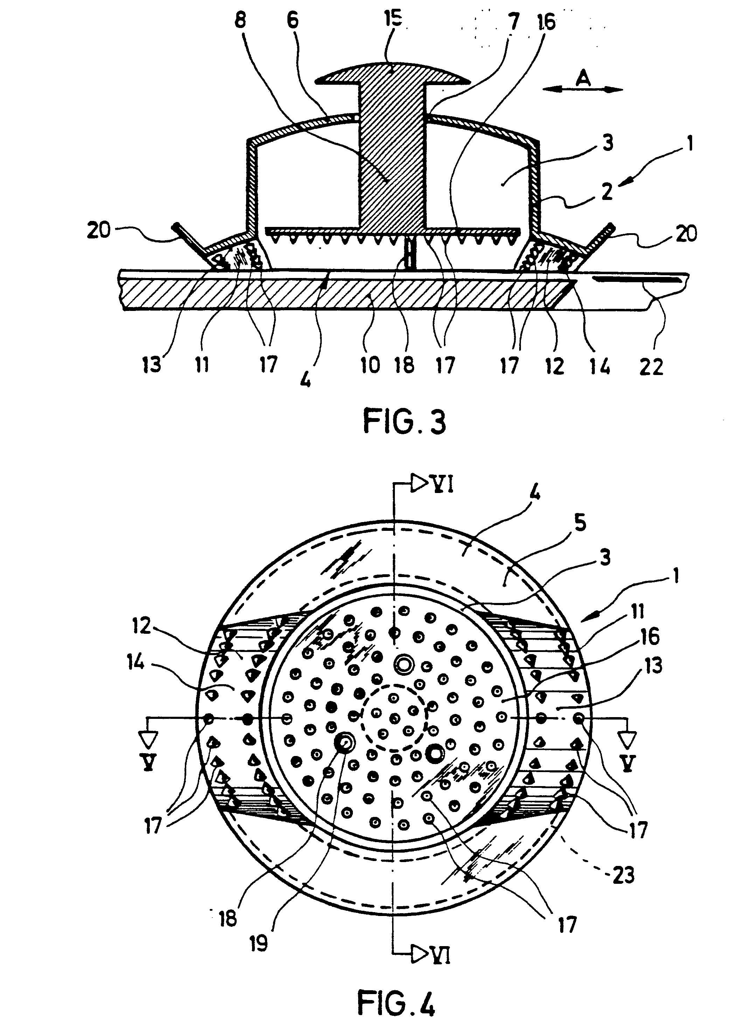

Es wird nun auf die Besonderheiten der ersten Ausführungsform gem. der Fig. 1 bis 3 eingegangen. Bei dieser Ausführungsform ist der Randflansch 5 des Halters 1 im Bereich der Haltevertiefungen 11 und 12 im Abstand zum Gehäuse mit schräg angestellten Fingerschutzflanschen 20 versehen, welche auf der der Unterseite 4 abgewandten Seite des Randflansches 5 die Haltevertiefungen 11 und 12 übergreifen. Dies ist besonders deutlich aus der Fig. 3 ersichtlich. Wie man aus der Fig. 1 ersehen kann, grenzt der Fingerschutzflansch in einer geraden Kante 21 an den Randflansch 5 an. Diese grade Kante 21 bewirkt, daß selbst bei starkem Verkippen des Halters 1 der Halter 1 nicht mit dem Messer, welches in Fig. 3 schematisch dargestellt und mit 22 bezeichnet ist, in Berührung kommen kann.

Im Vergleich dazu weist die zweite Ausführungsform gem. der Fig. 4 bis 6 keinen schräg angestellten Fingerschutzflansch sondern einen umlaufenden Schutzrand 23 auf. Der Randflansch 5 selber ist bei dieser Ausführungsform kreisrund ausgebildet. Bei dieser Ausführungsform kann ein Anhaken des Halters 1 an den Messern des Schneidhobels nicht vollständig verhindert werden. Jedoch trägt die Ausbildung der Haltevertiefungen dazu bei, daß der Abstand des Randflansches zu den Schneidmessern vergrößert wird und daher größere Kippbewegungen des Halters 1 nötig sind, um den Halter 1 mit den Messern in Berührung zu bringen.

Bei beiden gezeigten Ausführungsformen beträgt die lichte mittlere Weite der Haltevertiefungen 11 und 12 ungefähr 2/3 des Durchmessers des Gehäuses 2. Die mittlere Tiefe der Haltevertiefungen 11 und 12 beträgt etwa 1/5 der Höhe des Gehäuses 2.

Im folgenden wird nun die Wirkungsweise der Erfindung näher erläutert. Zum einen kann der Halter 1 in herkömmlicher Weise benutzt werden. Will man z. B. eine Tomate aufschneiden, so umgreift man mit einer Hand das Gehäuse 2 des Halters 1 und spießt die Tomate mit den Haltestiften 18 auf. Dabei bewegt sich der Ausschiebestempel 8 in eine obere Lage, so daß die Tomate den Innenraum 3 des Gehäuses 2 im wesertlichen ausfüllt.

Je nach Größe der Tomate wird diese über die Unterseite 4 des Halters hinausragen.

Zum Aufschneiden der Tomate wird der Halter mit der Tomate auf den Küchenhobel 10 aufgesetzt, wodurch mittels Hin- und Herbewegungen in Richtung A der Tomate über das Messer 22 der über die Unterseite 4 überstehende Teil der Tomate abgeschnitten wird. Wenn dies geschehen ist, kommt der Halter 1 mit seinem Randflansch 5 auf den Führungsleisten 9 des Küchenhobels 10 zu liegen. Beim weiteren Aufschneiden der Tomate wird diese mittels des Ausschiebestempels 8 dem Küchenhobel 10 weiter zugeführt, bis der Ausschiebestempel 8 seine untere Lage erreicht hat. In der unteren Lage ist die Druckplatte 16 des Ausschiebestempels 8 bündig mit der Unterseite 4 des Halters. Je nach Ausführung des Küchenhobels können die Haltespitzen 17 der Druckplatte noch über die Unterseite 4 des Halters 1 hinausragen.

Die Tomate wird während des Schneidvorganges durch die Haltestifte 18, je nach Größe auch durch die Innenwand des Gehäuses 2 und durch die Haltespitzen 17 der Druckplatte 16 gehalten. Gegen Ende des Aufschneidvorganges nimmt die Bedeutung der Haltespitzen 17 der Druckplatte 16 zu. Durch das Eindrücken der Haltespitzen 17 in die Oberfläche der Tomate wird bis zum Schluß ein sicheres Aufschneiden gewährleistet.

Bei einer kleineren Frucht, die vollständig in den Innenraum 3 des Gehäuses 2 paßt, wird man den Halter 1 sofort mit seinem Randflansch 5 auf die Führungsleisten 9 des Küchenhobels 10 auflegen und die in dem Gehäuse 2 befindliche Tomate mittels des Ausschiebestempels 8 dem Küchenhobel zuführen.

Will man nun eine längliche Frucht der Länge nach aufschneiden, so legt man diese in die beiden Haltevertiefungen 11 und 12, wobei sich die Haltespitzen 17 in die Frucht eindrücken. Nun wird die Frucht mit dem Halter auf den Küchenhobel 10 gelegt, wobei die Unterseite 4 des Halters 1 etwa parallel und im Abstand zur Oberfläche des Küchenhobels 10 liegt. Der Halter 1 wird nun, wie in den Fig. 3 und 5 durch den Pfeil A angedeutet, über das Messer 22 des Küchenhobels 10 hin und her geführt. Dabei wird die Frucht zum einen durch die Formgebung der Haltevertiefungen 11 und 12 zum anderen wesentlich auch durch die Haltespitzen 17 der Haltevertiefungen 11 und 12 sowie der Druckplatte 16 gehalten. Wenn die Frucht bündig mit der Unterseite abgeschnitten ist, wird der Ausschiebestempel weiter nach unten geführt, wobei die Druckplatte 16 nun großflächig auf der Frucht aufliegt und mit einer Vielzahl von Haltespitzen 17 in die Frucht eindringt, wodurch auch beim Aufschneiden länglicher Früchte in deren Längsrichtung bis zum Schluß ein sicheres Halten desselben gewährleistet ist.

Die Andruckplatte 16 kann auch oval ausgebildet sein und sich von der einen Haltevertiefung 11 zur anderen 12 erstrecken. Damit der Ausschiebestempel 18 auch ohne Haltestifte 18 gegen Verdrehen gesichert ist, kann dieser und der Durchbruch 7 im Querschnitt rechteckig ausgebildet sein.

**Patentansprüche**

Halter (1) zum Handhaben von auf Küchengeräten zu zerkleinernden Früchten, Gemüsen oder dergleichen, mit einem zur Unterseite hin offenen, die zu zerkleinernde Frucht zumindest teilweise in seinem Innenraum (3) aufnehmenden etwa zylinderförmigen Gehäuse (2), um welches herum ein die Unterseite (4) des Halters bildender Randflansch (5) angeordnet ist, wobei der Boden (6) des Gehäuses (2) mit einem Durchbruch (7) versehen ist, in welchem ein Ausschiebestempel (8) koaxial zur Gehäuseachse verschiebbar geführt ist, dadurch gekennzeichnet, daß der Randflansch (5) auf der Unterseite (4) des Halters (1) an mindestens einer Stelle seines Umfanges eine muldenförmige Haltevertiefung (11, 12) aufweist, durch die der Innenraum (3) des Gehäuses (2) radial nach außen mit der Umgebung verbunden ist, wobei die muldenförmige Haltevertiefung (11, 12) sowie der Innenraum (3) des Gehäuses (2) zur Halterung länglicher Früchte zu ihrer Zerkleinerung in Längsrichtung gestaltet sind.

2. Halter nach Anspruch 1, dadurch gekennzeichnet, daß zwei Haltevertiefungen (11, 12) an sich diametral gegenüberliegenden Stellen des Umfanges ausgebildet sind.

3. Halter nach Anspruch 1 oder 2, dadurch gekennzeichnet, daß die Haltevertiefungen (11, 12) im wesentlichen eine zur Unterseite (4) des Halters (1) hin offene Wannenform aufweisen.

4. Halter nach mindestens einem der Ansprüche 1 bis 3, dadurch gekennzeichnet, daß der Grund der Haltevertiefungen (11, 12) im flachen Winkel bezüglich der Unterseite (4) des Halters (1) zum Innenraum (3) des Gehäuses (2) hin abfällt.

5. Halter nach mindestens einem der Ansprüche 1 bis 4, dadurch gekennzeichnet, daß die Form der Haltevertiefungen (11, 12) jeweils etwa einem Teil der Mantelfläche eines gedachten Paraboloides entspricht, dessen Symmetrieachse quer zur Achse des Gehäuses (2) liegt und dessen Achse schneidet.

6. Halter nach mindestens einem der Ansprüche 1 bis 5, dadurch gekennzeichnet, daß auf dem Grund (13, 14) der Haltevertiefungen (11, 12) verteilt Haltespitzen (17) für die zu zerkleinernde Frucht angebracht sind.

7. Halter nach mindestens einem der Ansprüche 1 bis 6, dadurch gekennzeichnet, daß der Ausschiebestempel (8) eine an sich bekannte Fruchtandruckplacte (16) aufweist, deren Durchmesser dem Durchmesser des Gehäuses (2) angepaßt ist.

8. Halter nach mindestens einem der Ansprüche 1 bis 7, dadurch gekennzeichnet, daß der Randflansch (5) des Halters (1) im Bereich der Haltevertiefungen (11, 12) im Abstand zum Gehäuse (2) an sich bekannte schräg angestellte Fingerschutzflansche (20) aufweist, welche auf der der Unterseite (4) abgewandten Seite des Randflansches (5) die Haltevertiefungen (11, 12) übergreifen.

9. Halter nach mindestens einem der Ansprüche 1 bis 8, dadurch gekennzeichnet, daß die mittlere lichte Weite einer Haltevertiefung (11 bzw. 12) etwa 2/3 des Durchmessers des Gehäuses (2) beträgt.

10. Halter nach mindestens einem der Ansprüche 1 bis 9, dadurch gekennzeicnet, daß die mittlere Tiefe einer Haltevertiefung (11 bzw. 12) etwa 1/5 der Höhe des Gehäuses (2) beträgt.

11. Halter nach mindestens einem der Ansprüche 1 bis 10, dadurch gekennzeichnet, daß die mittlere Neigung der Haltevertiefung (11 bzw. 12) zum Innenraum (3) des Gehäuses (2) bezüglich der Unterseite (4) etwa 15° beträgt.

12. Halter nach mindestens einem der Ansprüche 1 bis 11, dadurch gekennzeichnet, daß die Fruchtandruckplatte (16) als sich von einer Haltevertiefung (11) zur anderen (12) erstreckendes Oval ausgebildet ist.

13. Halter nach mindestens einem der Ansprüche 1 bis 13, dadurch gekennzeichnet, daß der Querschnitt des Ausschiebestempels (8) und der Durchbruch (7) rechteckig ausgebildet sind.

**Claims**

1. A holder (1) for handling food, vegetables or the like for preparation in a kitchen utensil, comprising a substantially cylindrical housing (2), which is open at the bottom and which receives the food for preparation at least partially in its interior (3), an edge flange (5) which forms the underside (4) of the holder being disposed around the housing (2), the end (6) of the housing (2) being formed with an aperture (7) in which an ejector (6) is guided for displacement coaxially of the housing axis, characterised in that the edge flange (5) on the underside (4) of the holder (1) has a trough-shaped retaining recess (11, 12) at least at one place on its periphery, by means of which recess the interior (3) of the housing (2) is connected radially out to the surroundings, the trough-shaped retaining recess (11, 12) and the interior (3) of the housing (2) being designed to accommodate elongate fruit for preparation thereof in the longitudinal direction.

2. A holder according to claim 1, characterised in that two retaining recesses (11, 12) are formed at diametrically opposite places of the periphery.

3. A holder according to claim 1 or 2, characterised in that the retaining recesses (11, 12) have basically a bath shape open towards the underside (4) of the holder (1).

4. A holder according to at least one of claims 1 to 3, characterised in that the base of the retaining recesses (11, 12) drops away at an oblique angle in respect of the underside (4) of the holder (1) to the interior (3) of the housing (2).

5. A holder according to at least one of claims 1 to 4, characterised in that the shape of the retaining recesses (11, 12) corresponds in each case substantially to part of the outer surface of an imaginary parabaloid, the axis of symmetry of which is situated transversely of and intersects the axis of the housing (2).

6. A holder according to at least one of claims 1 to 5, characterised in that retaining spikes (17) for the fruit for preparation are disposed in distributed form on the base (13, 14) of the retaining recesses (11, 12).

7. A holder according to at least one of claims 1 to 6, characterised in that the ejector (8) has a known fruit contact-pressure plate (16), the diameter of which matches the diameter of the housing (2).

8. A holder according to at least one of claims 1 to 7, characterised in that the edge flange (5) of the holder (1) has known inclined finger guard flanges (20) in the region of the retaining recesses (11, 12) at a distance from the housing (2), said flanges engaging over the retaining recesses (11, 12) on that side of the edge flange (5) which is remote from the underside (4).

9. A holder according to at least one of claims 1 to 8, characterised in that the average clear width of a retaining recess (11, 12) is approximately two-thirds of the diameter of the housing (2).

10. A holder according to at least one of claims 1 to 9, characterised in that the average depth of a retaining recess (11, 12) is about one-fifth of the height of the housing (2).

11. A holder according to at least one of claims 1 to 10, characterised in that the average the incination of the retaining recess (11, 12) to the interior (3) of the housing (2) in respect of the underside (4) is about 15°.

12. A holder according to at least one of claims 1 to 11, characterised in that the fruit contact-pressure plate (16) is constructed as an oval extending from one retaining recess (11) to the other (12).

13. A holder according to at least one of claims 1 to 13, characterised in that the cross-section of the ejector (8) and the aperture (7) are rectangular.

## Revendications

1. Support pour la manipulation de fruits, légumes ou autres destinés à être coupés sur des ustensiles de cuisine, comportant un boîtier qui est approximativement cylindrique et ouvert vers le bas, est destiné à accueillir au moins partiellement le fruit à couper et autour duquel est disposée une collerette marginale formant le côté inférieur du support, le socle du boîtier comportant une ouverture dans laquelle est introduit selon l'axe du boîtier un poussoir mobile, caractérisé en ce que la collerette marginale (5) présente sur le côté inférieur (4) du support (1) à au moins un endroit de sa circonférence une encoche de retenue (11, 12) en forme d'auge par laquelle la partie intérieure (3) du boîtier (2) est reliée radialement vers l'extérieur avec l'environnement.

2. Support selon la revendication 1, caractérisé en ce que deux encoches de retenue (11, 12) sont réalisées à deux endroits diamétralement opposés de la circonférence

3. Support selon la revendication 1 ou 2, caractérisé en ce que les encoches de retenue (11, 12) présentent pour l'essentiel une forme de cuve ouverte vers le côté inférieur (4) du support (1).

4. Support selon l'une au moins des revendications 1 à 3, caractérisé en ce que le fond des encoches de retenue (11, 12) est incliné par rapport au côté inférieur (4) du support (1) selon un angle plat vers l'intérieur (3) du boîtier (2).

5. Support selon l'une au moins des revendications 1 à 4, caractérisé en ce que la forme de chaque encoche de retenue (11, 12) correspond approximativement à une partie de la nappe d'un paraboloïde imaginaire dont l'axe de symétrie est transversal à l'axe du boîtier (2) et coupe ce dernier.

6. Support selon l'une au moins des revendications 1 à 5, caractérisé en ce que des pointes de retenue (17) pour le fruit à couper sont réparties sur le fond (13, 14) des encoches de retenue (11, 12).

7. Support selon l'une au moins des revendications 1 à 6, caractérisé en ce que le poussoir (8) présente une plaque (16) connue en soi, sur laquelle est pressé le fruit et dont le diamètre est adapté à celui du boîtier (2).

8. Support selon l'une au moins des revendications 1 à 7, caractérisé en ce que la collerette marginale (5) du support (1) présente au niveau des encoches de retenue (11, 12) des brides (20) de protection pour les doigts connues en soi, inclinées et écartées du boîtier (2) et qui, du côté de la collerette marginale (5) qui est opposé au côté inférieur (4), chevauchent les encoches de retenue (11, 12).

9. Support selon l'une au moins des revendications 1 à 8, caractérisé en ce que le diamètre intérieur moyen d'une encoche de retenue (11 ou 12) est égal aux 2/3 environ du diamètre du boîtier (2).

10. Support selon l'une au moins des revendications 1 à 9, caractérisé en ce que la profondeur moyenne d'une encoche de retenue (11 ou 12) est environ égale à 1/5 de la hauteur du boîtier (2).

11. Support selon l'une au moins des revendications 1 à 10, caractérisé en ce que l'inclinaison moyenne de l'encoche de retenue (11, 12) vers l'intérieur (3) du boîtier (2) est d'environ 15° par rapport au côté inférieur (4).

12. Support selon l'une au moins des revendications 1 à 11, caractérisé en ce que la plaque (16) sur laquelle est pressé le fruit est réalisée sous la forme d'un ovale allant d'une encoche de retenue (11) à l'autre (12).

13. Support selon l'une au moins des revendications 1 à 13, caractérisé en ce que la section transversale du poussoir (8) et l'ouverture (7) sont rectangulaires.

0 196 550

FIG.1

FIG.2

1

FIG. 3

FIG.4

3

FIG.5

FIG.6